Europäisches Patentamt

European Patent Office

Office européen des brevets

(11) Veröffentlichungsnummer: **0 504 654 A1**

# EUROPÄISCHE PATENTANMELDUNG

(21) Anmeldenummer: **92103634.9**

(22) Anmeldetag: **03.03.92**

(51) Int. Cl.5: **B65G 13/07**, B65G 13/11, B65G 43/10

(30) Priorität: **22.03.91 DE 4109367**

(43) Veröffentlichungstag der Anmeldung:
**23.09.92 Patentblatt 92/39**

(84) Benannte Vertragsstaaten:
**AT BE CH DE DK ES FR GB IT LI NL SE**

(71) Anmelder: **TRANSNORM SYSTEM GmbH**
**Förster Strasse 2**
**W-3207 Harsum(DE)**

(72) Erfinder: **Almes, Horst-Dieter**
**Einumer Strasse 78**
**W-3200 Hildesheim(DE)**

(74) Vertreter: **Arendt, Helmut, Dipl.-Ing.**
**Patentanwalt Bergiusstrasse 2 c**
**W-3000 Hannover 51(DE)**

(54) **Staudruckloser Staurollenförderer.**

(57) Ein staudruckloser Staurollenförderer (1) mit Friktionsantrieb ist in mehrere voneinander unabhängige Sektionen (1a-1e) mit jeweils eigenen Friktionsantrieben (5) und elektronischen Elementen (30) zum Ein- und Ausschalten der Antriebe gegliedert. Dadurch ist der gesamte Förderer modular mit standardisierten Einzelelementen aufgebaut, die eine einfache zeitsparende Montage ermöglichen.

Fig.1

Die Erfindung betrifft einen staudrucklosen Staurollenförderer mit Friktionsantrieb, bestehend aus einer Mehrzahl von in Förderrichtung hintereinander angeordneten, zylindrischen Rollen, deren Enden in einem Bandlaufprofil gelagert sind, mit einem unter den Rollen angeordneten Friktionsgurtantrieb, wobei der Friktionsgurt als Endlosgurt über Umlenk- und Antriebsrollen geführt und von einem Elektromotor angetrieben wird, sowie mit Elementen zum Ein- und Ausschalten des Förderantriebs.

Es sind Staurollenförderer mit mechanischen Stauschaltern bekannt, die in der Lage sind, beim Fördern von Stückgut das Aneinanderstoßen des geförderten Gutes zu vermeiden, wenn die Förderbahn überfüllt wird. Die Gefahr des Aneinanderstoßens entsteht dann, wenn die Zufuhr von Fördergut dessen Entnahme vom Förderer übersteigt. Es gibt empfindliches Fördergut, bei dem darauf zu achten ist, daß jeglicher Druck durch Aneinanderstoßen vermieden wird. Am geeignetsten hierfür hat sich das Abschalten einzelner angetriebener Segmente erwiesen. Hierfür dienen mechanische Stauschalter, die dafür sorgen, daß der Friktionsgurt unterhalb der Rollen abgesenkt wird. Gleichzeitig muß in solchen Fällen dafür gesorgt werden, daß die sich im Leerlauf weiterdrehenden Rollen so rasch wie möglich zum Stillstand gelangen. Dafür sind Bremseinrichtungen notwendig. Das Schalten und Absenken des Friktionsgurtes erfordert also einen erheblichen mechanischen Aufwand, insbesondere dann, wenn das Schalten, Absenken und Heben des Friktionsgurtes mit Hilfe von Druckluft oder elektrisch durchgeführt wird. Anlagen dieser Art sind weder montagefreundlich noch wartungsarm.

Der Erfindung liegt die Aufgabe zugrunde, einen Staurollenförderer nach dem eingangs genannten Gattungsbegriff zu schaffen, dessen Aufbau vereinfacht und mit einem geringen Montageaufwand verbunden ist. Mechanische Schaltelemente, wie Hebel, Federn, eine Hubpneumatik der bisher üblichen staudrucklosen Förderer und auch schiefe Ebenen sollen entfallen. Zur Lösung wird vorgeschlagen, den gesamten Förderer in mehrere, voneinander unabhängige Sektionen mit jeweils eigenen Friktionsantrieben und elektronischen Elementen zum Ein- und Ausschalten zu gliedern.

Dadurch ist der gesamte Förderer modular mit standarisierten Einzelelementen aufgebaut. Da die Rollen lose in Aufnahmeschlitze der Bandlaufprofile eingelegt sind, können die Rollenteilung und die Sektionslängen einfach variiert werden. Die Förderer sind wartungsarm und montagefreundlich. Jede Sektion ist mit einem Steuerungsmodul ausgerüstet.

Weitere, den Erfindungsgegenstand vorteilhaft gestaltende Merkmale sind in den Unteransprüchen angegeben.

In der Zeichnung ist ein Ausführungsbeispiel der Erfindung schematisch dargestellt und nachstehend erläutert.

Es zeigen:

Fig. 1    die Gesamtansicht eines aus fünf Sektionen bestehenden Staurollenförderers,

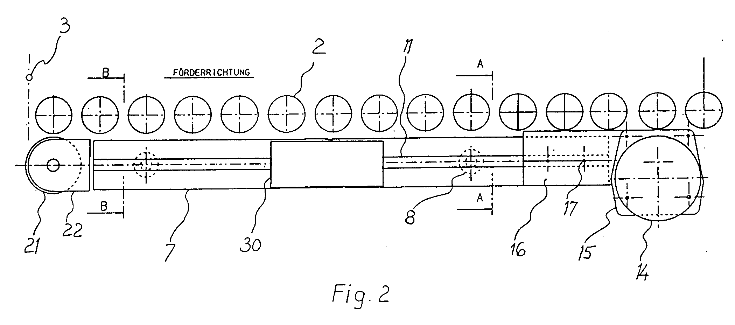

Fig. 2    eine Sektion des Förderers in größerem Maßstab,

Fig. 3    einen Querschnitt im Bereich der Befestigung des Tragprofils an einem Bandlaufprofil,

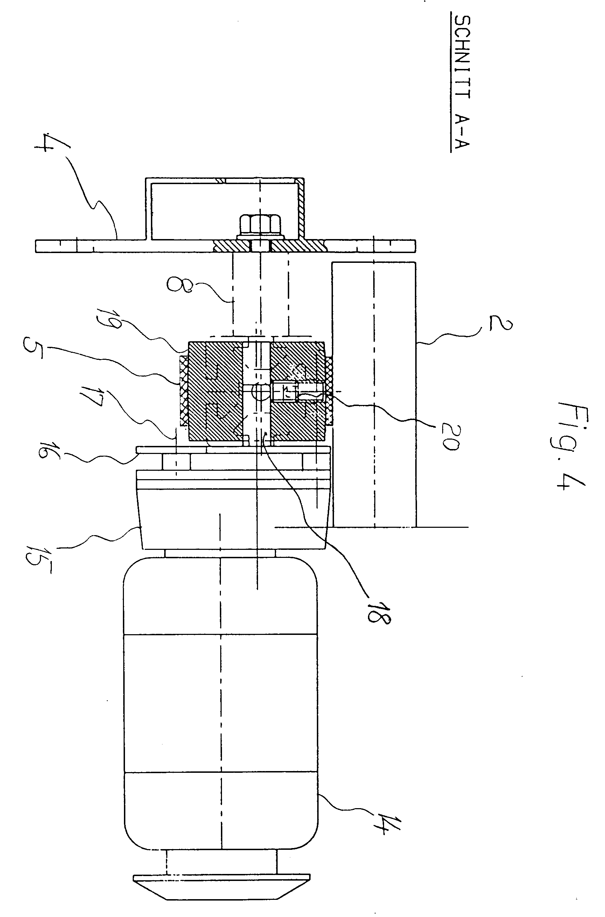

Fig. 4    einen weiteren Querschnitt durch die Fördersektion  im Bereich des Sektionsantriebes und

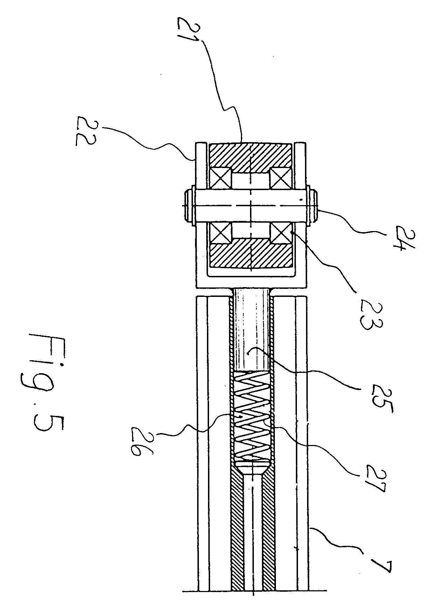

Fig. 5    einen Horizontalschnitt durch die Umlenkrolle am auslaufseitigen Ende der Sektion.

Der Staurollenförderer 1 ist in fünf Sektionen 1a - 1e unterteilt. Jede Sektion weist eine bestimmte Anzahl zylindrischer Tragrotten 2 auf. Das einlaufseitige Ende des Förderers befindet sich bei der Sektion 1a. Zwischen deren auslaufseitigem Ende und dem einlaufseitigen Ende der folgenden Sektion 1b befindet sich eine Lichtschranke 3a. Weitere Lichtschranken 3b - 3e befinden sich in entsprechenden Positionen zwischen den in Laufrichtung folgenden Sektionen.

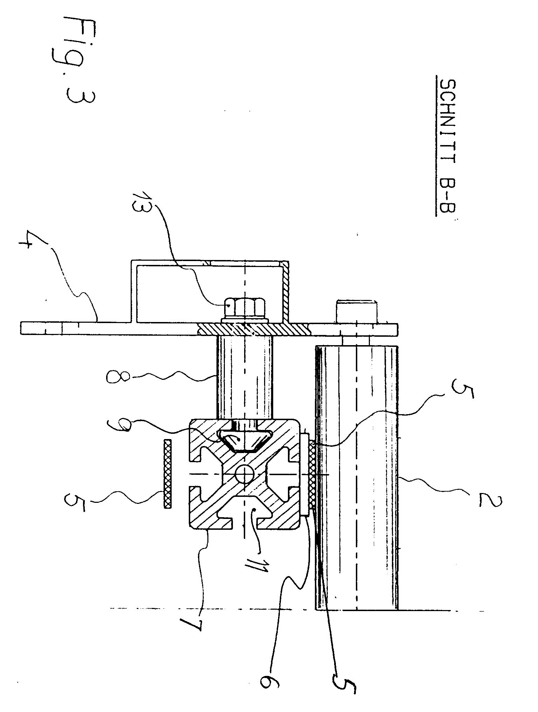

Die Rollen 2 sind in zu beiden Seiten angeordneten Bandlaufprofilen 4 gelagert. Sie sind mit speziellen Lagerbuchsen in nach oben offenen Lagerschlitzen angeordnet und können leicht herausgehoben und ausgewechselt werden. Die Rollen werden von einem Friktionsband 5 angetrieben, daß durch eine Gurtabtragung 6 auf der Oberseite eines Tragprofils 7 aufliegt und ständig gegen die Rollen 2 gedrückt wird. Jede einzelne Sektion wird über das Tragprofil 7 mittels Befestigungselementen 8 am Bandlaufprofil 4 befestigt. Die Befestigungselemente können, je nach Einbausituation, variabel gestaltet werden. Figur 3 zeigt die Sektionsanbringung mittels Distanzbuchse 8, Sechskantschraube 13 und Nutenstein 9.

Am einlaufseitigen Ende jeder Sektion befindet sich eine Antriebseinheit mit einem Elektromotor 14 mit einem Übersetzungsgetriebe 15. Diese Einheit wird über eine Halterung 16 an dem Tragprofil 7 befestigt. Zur Befestigung dienen Schrauben 17. Die Ausgangswelle des Getriebes ist mit 18 bezeichnet, auf der das Antriebsrad 19 mit Hilfe von Klemmschrauben 20 fixiert ist.

Am auslaufseitigen Ende ist die Umlenkrolle 21 jeder Sektion in einem gabelförmigen Halter 22 angeordnet und gelagert. Bei dem gezeigten Beispiel sind Wälzlager 23 für die Lagerung der Umlenkrolle 21 auf der Drehachse 24 verwendet. Der gabelförmige Halter greift mit einem kolbenförmigen Schaft 25 in eine axial gerichtete Bohrung 26 des Tragprofils 7. Zwischen dem freien Schaftende und dem inneren Ende der Bohrung ist eine Druckfeder 27 eingefügt, durch deren nach auswärts gerichtete Kraft die Umlenkrolle 21 den Friktionsgurt ständig mit der notwendigen Vorspannung beaufschlagt.

Der Antriebsmotor einer Sektion ist ausgeschaltet, sobald deren Lichtschranke länger als eine vorbestimmte Zeiteinheit lang unterbrochen ist oder wenn die Lichtschranke unterbrochen wird und die in Förderrichtung benachbarte Steuerungseinheit 30 einen Motorstillstand signalisiert.
Sobald die unterbrochene Lichtschranke oder die in Förderrichtung benachbarte Lichtschranke wieder frei wird, kann der Motor ohne Zeitverzögerung starten.
Bei einer Ausführung mit einer einstellbaren Zeitverzögerung kann der Motor starten, wenn das Signal der in Förderrichtung benachbarten Steuerungseinheit vom Signal "Motor steht" nach "Motor läuft" wechselt. Wenn die Lichtschranke der benachbarten Steuerungseinheit dabei wieder frei wird, verkürzt sich entsprechend die Zeitverzögerung. Die Zeitverzögerung durch das Freisetzen der benachbarten Lichtschranke ist als Vorrangsteuerung vorgesehen.

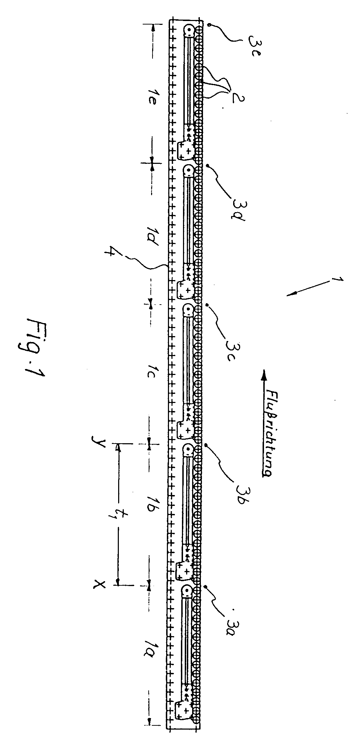

Mit $t_1$ ist eine vorbestimmte Laufzeit der Förderersektionen von X nach Y angegeben (Fig. 1).
Der Friktionsgurt 5, beispielsweise der Sektion 1b, hält an, wenn der Friktionsgurt der Sektion 1c steht und die Lichtschranke 3b unterbrochen wird. Der Friktionsgurt der Sektion 1b hält auch dann an, wenn die Lichtschranke 3b gleich oder länger als die Zeit $t_1$ unterbrochen wird. Dieser Ablauf gilt für die Fluß- oder Förderrichtung I.

**Patentansprüche**

1. Staudruckloser Staurollenförderer mit Friktionsantrieb, bestehend aus einer Mehrzahl von in Förderrichtung hintereinander angeordneten, zylindrischen Rollen, deren Enden in einem Bandlaufprofil gelagert sind, mit einem unter den Rollen angeordneten Friktionsgurtantrieb, dessen Friktionsgurt als Endlosgurt über Umlenk- und Antriebsrollen geführt und von einem Elektromotor angetrieben wird, sowie mit Elementen zum Ein- und Ausschalten des Förderantriebs, dadurch gekennzeichnet, daß der gesamte Förderer (1) in mehrere, voneinander unabhängige Sektionen (1a - 1e) mit jeweils eigenen Friktionsantrieben und elektronischen Elementen zum Ein- und Ausschalten der Antriebe gegliedert ist.

2. Förderer nach Anspruch 1, dadurch gekennzeichnet, daß die Friktionsgurte (5) unabhängig vom Betriebszustand in ständigem Reibkontakt mit den Förderrollen stehen.

3. Förderer nach Anspruch 1 oder 2, dadurch gekennzeichnet, daß die Antriebe der Sektionen durch Lichtschranken (3a - 3e) steuerbar und diese miteinander verknüpft sind.

4. Förderer nach Anspruch 3, dadurch gekennzeichnet, daß die Lichtschranken, in Förderrichtung gesehen, jeweils am auslaufseitigen Ende einer Sektion angeordnet sind.

5. Förderer nach einem der Ansprüche 1 bis 4, dadurch gekennzeichnet, daß die Lichtschranke der auslaufseitigen Sektion des Förderers gleichzeitig mit der Abführeinrichtung für das zu fördernde Gut verbunden ist.

6. Förderer nach einem der Ansprüche 1 bis 5, dadurch gekennzeichnet, daß die Lichtschranken mit Zeitschaltelementen verbunden sind.

7. Förderer nach einem der Ansprüche 1 bis 6, dadurch gekennzeichnet, daß jede Sektion ein stranggepreßtes Tragprofil (7) aufweist, auf dessen Oberseite eine Gurtabtragung (6) aus Kunststoff angeordnet ist, durch welche der Obertrum des Friktionsgurtes ständig an den Unterseiten der Rollen anliegt und daß die Rollen und das Tragprofil in zu deren beiden Seiten angeordneten Bandlaufprofilen (4) gelagert, bzw. daran befestigt sind, welche sich über die Gesamtlänge des Förderers mit allen Sektionen erstrecken.

8. Förderer nach einem der Ansprüche 1 bis 7, dadurch gekennzeichnet, daß am Einlaufende eines Tragprofils ein Getriebemotor (14, 15) mit einer Antriebsrolle (19) und am Auslaufende eine Umlenkrolle (21) angeordnet sind, um welche der als Endlosband ausgebildete Friktionsgurt geführt ist, wobei die Umlenkrolle unter der Spannkraft einer Spannfeder (27) steht.

9. Förderer nach Anspruch 8, dadurch gekennzeichnet, daß die Umlenkrolle (21) in einem gabelförmigen Halter (22) gelagert ist, der stirnseitig mit einem kolbenförmigen Schaft (25) axial verschiebbar in eine Sackbohrung (26) des Tragprofils greift und darin federnd gelagert ist.

10. Förderer nach Anspruch 9, dadurch gekennzeichnet, daß zwischen dem freien Ende des Schaftes und dem inneren Ende der Sackbohrung eine Druckfeder (27) angeordnet ist.

11. Förderer nach einem der Ansprüche 1 bis 10, dadurch gekennzeichnet, daß zur dezentralen Steuerung jede Sektion mit einer Steuereinheit (30) ausgerüstet ist.

12. Förderer nach Anspruch 11, dadurch gekennzeichnet, daß die Steuereinheiten aller Sektionen miteinander gekoppelt sind.

Fig.1

Fig. 2

FÖRDERRICHTUNG

Fig. 3

SCHNITT B-B

SCHNITT A-A

Fig. 4

Fig.5

| EINSCHLÄGIGE DOKUMENTE | | EP 92103634.9 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | DE - B - 2 816 529 (MANNESMANN) * Fig. 1; Spalte 3, Zeilen 1,2 * | 1-4,11 | B 65 G 13/07 B 65 G 13/11 B 65 G 43/10 |
| Y | | 7 | |
| X | EP - A - 0 350 433 (MANNESMANN) * Fig. 3; Spalte 1, Zeilen 8,9 * | 1,2, 11,12 | |
| Y | DE - A - 3 922 397 (PROTECH) * Fig. 2; Spalte 2, Zeile 54 * | 7 | |
| A | ---- | 8-10 | |

| RECHERCHIERTE SACHGEBIETE (Int Cl⁵) |
|---|
| B 65 G |

Der vorliegende Recherchenbericht wurde für alle Patentansprüche erstellt.

| Recherchenort | Abschlußdatum der Recherche | Prüfer |
|---|---|---|
| WIEN | 27-05-1992 | BAUMGARTNER |